Europäisches Patentamt

European Patent Office

Office européen des brevets

(11) Publication number: **0 342 730**
**A2**

(12) **EUROPEAN PATENT APPLICATION**

(21) Application number: 89201103.2

(51) Int. Cl.⁴: **G01N 15/05**

(22) Date of filing: 28.04.89

(30) Priority: 02.05.88 NL 8801140

(43) Date of publication of application:
23.11.89 Bulletin 89/47

(84) Designated Contracting States:
AT BE CH DE ES FR GB GR IT LI LU NL SE

(71) Applicant: **Schouten, Theodorus**
**Bavelselaan 94**
**NL-4834 TE Breda(NL)**

(72) Inventor: **Schouten, Theodorus**
**Bavelselaan 94**
**NL-4834 TE Breda(NL)**

(74) Representative: **Noz, Franciscus Xaverius, Ir.**
**Algemeen Octrooibureau P.O. Box 645**
**NL-5600 AP Eindhoven(NL)**

(54) Device for determining the erythrocyte sedimentation rate of blood samples.

(57) A device for determining the erythrocyte sedimentation rate (ESR) of blood samples comprises receiving means (4) for receiving blood sample tubes (3) at a number of fixed positions therein, measuring means (16) for detecting blood sample tubes placed in the receiving means and measuring ESR's of blood samples driving means (10-12) for driving the measuring means horizontally along the number of fixed positions of the receiving means, and a computer unit. The computer unit is provided with timing means for providing a position-related control signal for each identified blood sample tube when a predetermined time period has elapsed since the blood sample tube was placed in the receiving means. A control means is used to determine the position of newly placed blood sample tubes in the receiving means and for controlling the measurement of the ESR's. The measuring means may comprise a CCD-image pick-up (13) or a single optical sensor. An output means is provided with a same plurality of two colour LED's as the plurality of fixed positions in the receiving means. The device may comprise a bar code reader.

EP 0 342 730 A2

Fig. 3

Fig. 4.

EP 0 342 730 A2

## Device for determining the erythrocyte sedimentation rate of blood samples.

The invention relates to a device for determining the erythrocyte sedimentation rate of blood samples, said device comprising a receiving means for receiving blood sample tubes on a number of fixed positions therein.

A device of the kind just mentioned is known from the French patent application 2 413 661.

One embodiment of this known device for simultaneously determining the erythrocyte sedimentation rate of a number of blood samples is provided with an equal number of level detectors which are simultaneously driven vertically and on both sides along the blood sample tubes.

The invention aims at improving this device such that the erythrocyte sedimentation rates of various blood samples can be measured in rapid succession, and that blood sample tubes whose erythrocyte sedimentation rate has been measured can be removed and new blood sample tubes, whose erythrocyte sedimentation rate is to be measured, can be placed in between.

For this purpose the invention provides a device for determining the erythrocyte sedimentation rate of blood samples, said device comprising a receiving means for accommodating blood sample tubes at a number of fixed positions therein, a measuring means for detecting blood sample tubes and measuring erythrocyte sedimentation rates, a driving means for driving and measuring means horizontally along the number of fixed positions of the receiving means, and a computer unit which is provided with an input means for giving commands, a time measuring means for providing a position-related control signal for each blood sample tube identified, when a period of time determined in advance has elapsed since the blood sample tube was placed in the receiving means, a control means for driving the driving means, in response to commands from the input means and control signals from the time measuring means, for determining the position of newly placed blood sample tubes in the receiving means and measuring the erythrocyte sedimentation rates, respectively, a processor means for the processing of at least identification and measuring data, and an output means for outputting said data.

The invention will now be explained by means of an embodiment and with reference to the drawings, in which:

fig 1 is a plan view of a part of the device according to the invention;

fig 2 is an internal side view of the part of the device according to the invention shown in fig 1;

fig 3 is a block diagram of the computer unit of the device according to the invention;

fig 4 is an internal side view of a part of an other device according to the invention, wherein a CCD-image pick-up and a single scanning motor are used; and

fig 5 is a block diagram of the electronics between the CCD-image pick-up and the computer unit in the second embodiment of fig 4.

It is furthermore emphasized that the figures of the drawings are strongly simplified diagrammatic illustrations.

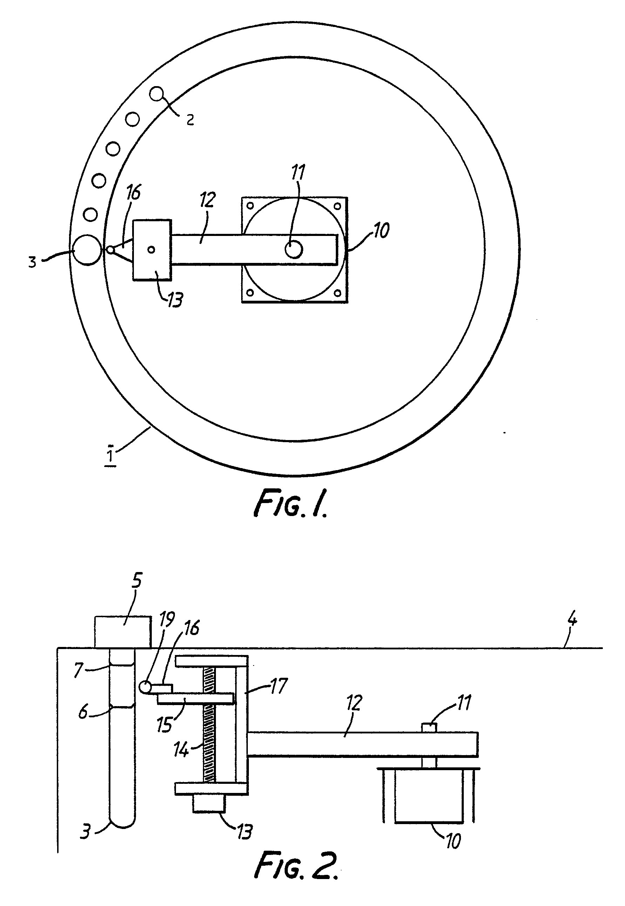

Fig 1 indicates with reference number 1 a receiving means for accommodating tubes which are indicated with the reference number 3, said receiving means being provided with a number of fixed positions, in a circular arrangement in this case, a couple of said fixed positions being indicated with the reference number 2. When the receiving means 1 is completely occupied with blood sample tubes 3, a number of for example 50 to 60 suchlike blood sample tubes 3 are thus arranged in the receiving means 1, spaced from each other by the same angular distance and describing a full circle. Put differently, the receiving means 1 is a stationary carrousel, in which the blood sample tubes 3 are accommodated in an upright position.

As already known the blood sample tubes 3 preferably have a diameter wider than 3mm, so that the blood sample tubes 3 can be shaken by hand, prior to being placed in the receiving means 1. Of course the blood sample tubes 3 are closed when they are placed. For the rest the principle of measuring the erythrocyte sedimentation rate is considered to be well-known.

Fig 2 illustrates one of the blood sample tubes 3, and reference number 4 indicates the upper side of the receiving device 1. The blood sample tube 3 is provided with a cap 5. The level of the clear plasma is indicated with the reference number 7, and that of the plasma with concentrated red blood cells is indicated with reference number 6.

Referring to figs 1 and 2 a stepping motor 10 is illustrated which, in combination with the shaft 11 and the arm 12, forms a first driving means. A stepping motor 13, in combination with the worm shaft 14 and the worm wheel 15, forms a second driving means. The first driving means 10, 11, 12 is coupled to the second driving means 13, 14, 15 by means of a connecting piece 17, which in this case also fulfils the functions of

2

a connecting means for the stepping motor 13 and the worm shaft 14, as well as that of a guide for the worm wheel 15.

To the worm wheel 15 there is fixed a measuring means 17, which may contain a single optical sensor 19, as in the case shown.

The sensor 19 serves to detect the blood sample tubes 3 which have been placed and to measure the erythrocyte sedimentation rate with regard to each blood sample tube 3 placed. The first driving means 10, 11, 12 drives the sensor 19 horizontally along the number of fixed positions 2 of the receiving means 1. The second driving means 13, 14, 15 coupled to the first driving means 10, 11, 12 drives the sensor 19 vertically along one blood sample tube 3 selected from those present in the receiving means 1. The erythrocyte sedimentation rate is determined sequentially, therefore, as will be further explained hereinafter.

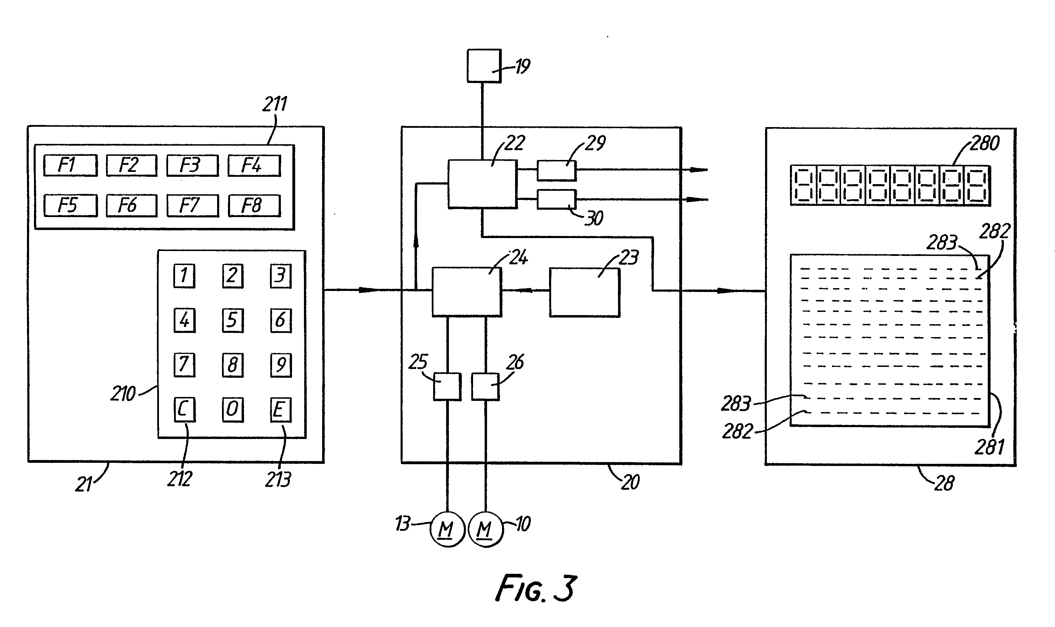

Fig 3 illustrates the computer unit of the device according to the invention of fig 1. The computer unit is provided with an input means 21 for inputting a unique identification number for each new blood sample tube 3 which has been placed or which is to be placed in the receiving means 1, and for giving commands, as will be described later on, with a processor unit 20 having a time measuring means 23 for providing a control signal for each identified blood sample tube 3, related to the position 2 thereof, when a period of time, which was determined in advance, has elapsed since the blood sample tube was placed in the receiving means 1, which period of time may for example be one hour, but which may also be adjustable, so that shorter and longer periods can be set, with a control means 24 for driving the stepping motors 10 and 13 in response to commands from the input means 21 and control signals from the time measuring means 23, via a first driving means 26 and a second driving means 25, respectively, whereby the first driving means 26 is a high-power driving means and the driving means 25 is a low-power driving means, and whereby the stepping motors 10 and 13 are driven to determine the position 2 of newly placed blood sample tubes 3 in the receiving means 1 and to measure erythrocyte sedimentation rates respectively, with a processor means 22 for the processing of at least identification and measuring data, received from the input means 21 andfrom the sensor 19 resepctively, and with an output means 28 for outputting said data, which data may further include data with regard to positions, times of placement and erythrocyte sedimentation rates.

The input means 21 may comprise a numeric keyboard 210 and a function keyboard 211, whilst the output means 28 may have a display means 280 consisting of a number of 7-segment display units, for example eight units, as well as a field 281 of display elements 282 and 283, whereby the number of display elements 282, 283 is directly proportional to the number of positions 2 in the receiving means 1 and whereby at least one of the display elements 282, 283 respectively indicates the status of the respective position 2 in the receiving means 1 determined by the processor unit 20. In particular there are provided two light-emitting diodes 282, 283 for each position 2, namely a green diode and a red one, whereby the status indication is effected in that the light-emitting diodes 282, 283, which may be incorporated in a single component, light up, do not light up or light up intermittently (blink).

The display means 280 serves to display information or commands input by means of the numeric keyboard 210 and the function keyboard 211, as well as requests to input information or commands or to manipulate the keyboards 210 and 211 otherwise.

Also there may be provided a parallel interface means 29 and/or a serial interfacemeans 30, whose functions will be discussed in the following description of the operation of the device according to the invention.

The device according to the invention automatically determines the erythrocyte sedimentation rate of a blood sample in a blood sample tube 3. Generally the erythrocyte sedimentation rate is defined as the height of the layer of plasma which is present above the blood, after the blood has been at rest for one hour, and it is expressed in mm/h. The blood sample tubes 3 may be placed in the receiving means 1 at any point in time, at any position 2 and in any number. Before a blood sample tube 3 can be placed an identification number (to be called ID-number hereinafter) must be stated first. This ID-number can be used to check afterwards whether a blood sample tube 3 with a certain ID-number can indeed be found at the expected position 2. After the ID-number is known the blood sample tube 3 can be placed in the receiving means 1, of which the processor unit 20 is informed by striking one of the function keys of the function keyboard 211. The newly placed blood sample tube 3 will then be detected. If the position number is known to the processor unit 20, the blood sample tube 3 is definitively input. (The ID-number may also be input after the blood sample tube 3 has been placed, after a request by the output means 28, especially the display means 280, after the position for the blood sample tube 3 has been determined). After a waiting period of one hour the erythrocyte sedimentation rate will be determined automatically. If the processor unit 20 is provided with a printer port a printer can be connected to the device according to the invention, as a result of which the measuring data can automatically be put down on paper. The data which are reproduced by the printer can also be retrieved by means of the function keyboard 211.

When the serial interface means 30 shown in fig. 3, for example an RS-232-interface means, is present the device according to the invention can be coupled to a processor system, for example a personal computer. In this way a large quantity of information can be quickly retrieved from the processor unit 20, which information may possibly be displayed on the display of the processor system and/or be stored in a storing means. More data can be retrieved via the serial interface means 30 than via the function keyboard 211. The numeric keyboard 210 has at its bottom, on the right and on the left, an additional function key 212 for resetting the value of a newly input number to zero, and an enter key 213 for communicating the numbers which have been input to the processor unit 20.

In the illustrated embodiment the function keyboard 211 has eight function keys F1 - F8, whose functions will be discussed hereinafter.

Before a blood sample tube 3 can be placed in the receiving means 1 all positions 2 of the receiving means 1 need to be scanned by striking the function key F1. The sensor 19 will be moved along all positions 2, so that it can be checked whether or not a blood sample tube 3 is present. On the position status field 281 the presence or absence of a blood sample tube 3 is made known, as will be discussed hereafter. When the status of each position 2 has been determined by the processor unit 20 the display means 280 is cleared and "new" blood sample tubes 3 can be placed.

The procedure for inputting a newly placed blood sample tube 3 into the processor unit 20 consist of two steps, namely inputting an ID-number by means of the numeric keyboard 210 and scanning all positions 2 in order to verify whether said blood sample tube 3 has actually been placed in the receiving means 1.

The ID-number offers the user a possibility to check the blood sample tubes 3 present in the receiving means 1. The fact is that when the ID-number which has been given to a blood sample tube 3 is also input into the processor unit 20, it is possible at all times to check whether the ID-number of the blood sample tube 3 and the ID-number of the relevant position 2 in the receiving means 1 correspond. Since the ID-number is also reproduced on the printer list the data of the blood sample tubes 3 can be found by means of the ID-numbers. Via the numeric keyboard 210 an ID-number consisting of maximally 8 digits can be input. When the digits are being input they will be displayed on the display means 280. An input is completed by striking the enter key 213. The processor unit 20 checks with every input whether the ID-number is unique, that is that there is no other blood sample tube 3 with the same ID-number. If this is not the case the ID-number which has been input will not be accepted and a new ID-number may be input. When a unique ID-number is known the display means 280 will display a blinking message to strike key F1. This indicates that the blood sample tube 3 may be placed in the receiving means 1, after which key F1 of the function keyboard 211 (scanning function) must be struck, so that the processor unit 20 can determine at what position 2 the "new" blood sample tube 3 has been placed.

It is also possible to input both the ID-number and the position 2 prior to placing a blood sample tube 3. If no blood sample tube 3 is placed at the position 2 in question, after a blood sample tube 3 has been input according to the above-mentioned procedure, the position 2 which has been input will be released in order that a(nother) blood sample tube 3 can actually be placed there. If, after the input mentioned, the blood sample tube 3 is erroneously placed at an other position 2, this other position 2 will be input after scanning, by which the coupling between the ID-number which has been input and the position 2 is removed, however, so that a new ID-number is requested by the output means 28.

The scanning just mentioned consists of a continuous movement of the sensor 19 along all positions in the receiving means 1. During scanning two situations may occur. Either a newly placed blood sample tube 3 is found or no newly placed blood sample tube 3 is found.

In the former case the corresponding, that is position related, red LED 283 on the position status field 281 will start to blink and the display means 280 will display a message that the position number has been found. If the position number is correct the enter key 213 may be struck, as a result of which the blood sample tube 3 is definitively input in the processor unit 20. The corresponding red LED 283 on the position status field 281 will light up continuously in that case. If the position number is not correct the function key F1 may be struck again, as a result of which all positions are again checked for the presence of blood sample tubes 3.

In the latter case the display means 280 will display a message that no position has been found. When the enter key 213 is struck the display means 280 will again request an ID-number, by which the procedure as described above will be repeated. If, however, the key F1 is struck instead of the enter key 213, the sensor 19 will again be moved along all positions 2 in order to check once again whether blood sample tubes 3 are present.

After scanning has been completed and the operation of the enter key 213 has been finished, the display means 280 is cleared and the procedure described is repeated by inputting a next ID-number, if this is applicable.

It is again stated that if no blood sample tube 3 is found at a position 2, the corresponding green LED 282 in the position status field 281 will light up continuously, whilst in the case that there is no change in status the status of the corresponding red and green LEDs 283, 282 will not change either.

The erythrocyte sedimentation rate of a certain blood sample tube 3 can be retrieved by means of the key F2 of the function keyboard. When the key F2 is struck the display means 280 will display a message telling that the key F2 has been struck and requesting to input the number of a position 2 (for example 1 to 50 positions). This position number may be input on the numeric keyboard 210 and be communicated to the processor unit 20 by striking the enter key 213. When a position number is being input the digits keyed in will be displayed on the display means 280.

After a position number has been input the erythrocyte sedimentation rate, for example expressed in Westergreen units, will appear on the display means 280, provided a valid number has been input. Three situations may occur thereby, namely the situation that for this position no erythrocyte sedimentation rate has been determined yet, the situation that the processor unit 20 has not been able to determine the erythrocyte sedimentation rate and the situation that the erythrocyte sedimentation rate has been determined, in which last case the position, as well as the 3-digit (for example) erythrocyte sedimentation rate are displayed on the display means 280. This display is maintained until one of the keys of the keyboards 210, 211 is struck.

By means of the key F3 it is possible to retrieve the measuring time, which is defined as the time which has elapsed from the moment that the blood sample tube 3 present was recognized by the processor unit 20 until the moment that the erythrocyte sedimentation rate was determined. The measuring time will remain displayed on the display means 280 and is constantly adjusted until one of the keys of the keyboards 210 and 211 is struck.

By means of the key F4 the ID-number can be retrieved, whilst it is possible to correct an ID-number by means of the key F5, especially after scanning; whereby the ID-number to be corrected must first be reset to zero by means of the clear key 212, however.

By means of the key F6 the date and the time can be retrieved, since the processor unit 20 is equipped with a real time clock (not shown), whilst the date and the time can be input into the processor unit 20 by means of the key F7.

Finally each performance of a certain function can be broken off by means of the key F8.

The position status field 281 is built up of for example 50 red and 50 green LEDs, corresponding with 50 positions 2 for blood sample tubes 3 in the receiving means 1. Said LEDs provide a complete survey of what positions 2 are free, at what positions measuring is taking place and of what positions the erythrocyte sedimentation rate can be retrieved. This may be realised as follows. A green LED 282 will light up continuously when there is no blood sample tube 3 present at the position 2 in question, whilst said LED 282 will start to blink when a blood sample tube 3 whose erythrocyte sedimentation rate has been measured is present at the corresponding position 2, in order to indicate that the measuring value can be read out by means of the function keyboard 211 and that the blood sample tube 3 present at that position 2 can be removed from the receiving means 1.

The red LED 283 will light up continuously, as long as a blood sample tube 3, whose erythrocyte sedimentation rate has not been determined, is present at the corresponding position 2, whilst said LED 283 will start to blink when a newly placed blood sample tube 3 was found when the corresponding position 2 was scanned. Said blinking, or intermittent lighting up, will continue until the moment that the position number of the newly placed blood sample tube 3 has been confirmed, after which said LED 283 will light up continuously.

If the processor unit 20 is equipped with a parallel interface means 29 a printer can be connected thereto, so that the measuring data of the blood sample tubes 3 can be put on paper automatically. Always when an erythrocyte sedimentation rate has been determined the measuring data will be printed, whereby said data may consist of successively the position 2 (position number 1 - 50) of the blood sample tube 3, the ID-number, the erythrocyte sedimentation rate, the time of acceptation of a newly placed blood sample tube 3 and the accompanying ID-number by the processor unit 20, expressed in hours, minutes and seconds, as well as the measuring time, which also is listed in hours, minutes and seconds, whereby the date on which measuring took place can be reproduced once at the top of the page. A part of an eventual printout by the printer (not shown) may look as follows in that case:

| Measuring results of 14/04/90 | | | | |
|---|---|---|---|---|
| Position | ID No. | Result | Acceptation | Waiting time |
| 04 | 00001965 | 051 | 11:27:07 | 01:00:09 |
| 05 | 00001966 | 002 | 11:27:17 | 01:00:08 |
| 06 | 00001977 | 034 | 11:27:23 | 01:00:10 |
| 40 | 01238551 | 022 | 11:43:01 | 01:00:08 |
| 41 | 01238552 | 088 | 11:43:08 | 01:00:10 |
| 44 | 01238553 | 079 | 11:43:14 | 01:00:11 |
| 46 | 01238554 | 005 | 11:43:21 | 01:00:13 |
| 47 | 01238555 | 012 | 11:43:28 | 01:00:14 |
| 48 | 01238556 | 047 | 11:43:34 | 01:00:15 |
| 49 | 01238557 | 071 | 11:43:41 | 01:00:17 |
| 10 | 10000201 | 009 | 11:50:03 | 01:00:07 |
| 09 | 10000202 | 088 | 11:50:11 | 01:00:08 |
| 08 | 10000199 | 053 | 11:50:18 | 01:00:10 |

Besides these measuring data also a number of error messages can be put on paper, in case system errors occur, such as for example when a stepping motor 10 or 13 seizes or when a blood sample tube 3 is lost. If namely a blood sample tube 3 is expected at a certain position 2, but is not found by the processor unit 20, this this message will be reproduced via the printer. The position number and the ID-number of the blood sample tube 3 are thereby printed, so that the user can determine to which blood sample tube 3 the message refers.

The processor unit 20 may contain an 8-bit microprocessor, for example the 8085, besides of course the memory (not shown), for example 32k ROM and 8k RAM, whereby the read out memory may be programmable and erasable. The remaining hardware and software will be obvious to a person skilled in the art, so that it will not be discussed in more detail. It is emphasized, however, that only one embodiment has been discussed, to which the invention is indeed not limited. Thus the number of fixed positions 2 of the receiving means 1 do not have to describe a circle, but they may be arranged in a straight line, and the driving means do no necessarily have to comprise a stepping motor 10 or 13, but they may also be different driving means, certainly in the case of a linear arrangement of the positions 2. Also the input means 21 and the output means 28 may be arranged differently, especially in view of the requirements and wishes of users. Furthermore the device may have a printer as a standard accessory, but it may be also be provided with (interface options), for connection to an external printer or even to an entirely individual processing system, such as a modern personal computer with its peripheral equipment.

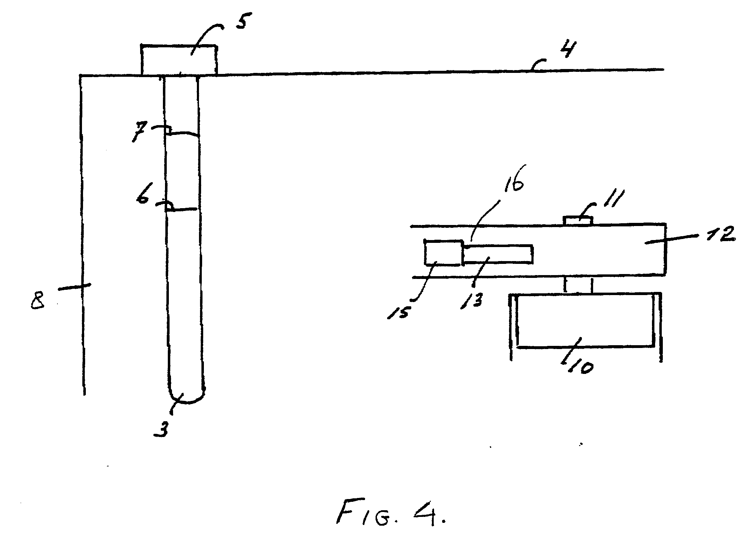

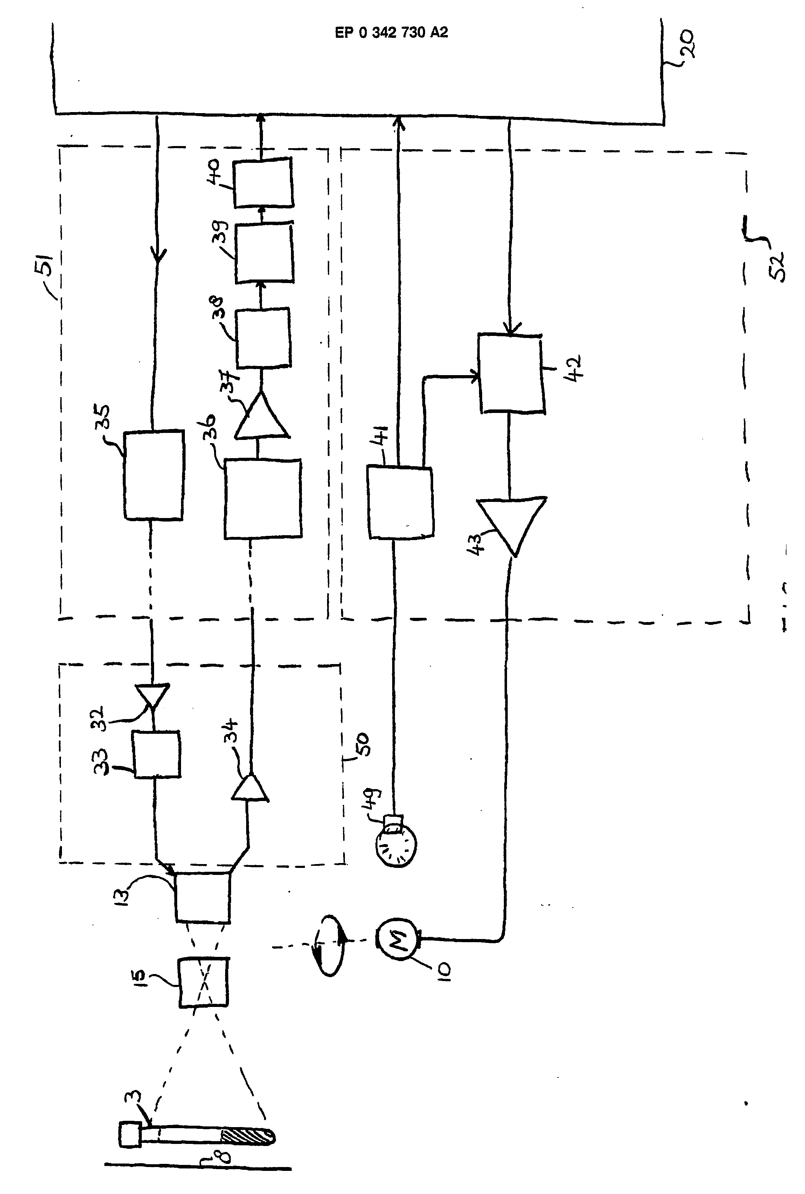

Now a second embodiment of the device according to the invention will be further explained with reference to figs 4 and 5 of the drawings.

Fig 4, which corresponds with fig 2, shows a strongly simplified and diagrammatic side view of a part of a second embodiment of the device according to the invention, whereby a CCD- image pick-up 13, especially a linear CCD-element, as an optical sensor and a single scanning motor 10 are used. The CCD-image pick-up 13 forms part of the measuring means 16, which is fixed in a hollow arm 12 which may be mounted on the shaft 11 of the scanning motor 10. The arm 12 may be built up of two U-shaped aluminium profiles. The reference number 15 indicates an objective for displaying the blood sample tube 3 on the CCD-image pick-up 13. The reference numbers 5, 6 and 7 indicate, as in fig 2, the cap of the blood sample tube 3, the level of the plasma with concentrated red blood cells and the level of the clear plasma (after sedimentation of course), and the reference number 4 indicates the upper side of the receiving device 1 (fig 1). The reference number 8 finally indicates the inner peripheral wall of the receiving device 1, which is provided with, or consists of, a retroreflecting material. In contrast to figure 4 figure 5 shows, behind the CCD- image pick-up 13 in the hollow arm 12, part of the electronics for driving and reading the CCD- image pick-up 13, which electronics will be explained hereafter with referecne to fig 5. At the side of the hollow arm 12 (for example the side which is not shown in fig 4), there has been provided a combination (not shown) consisting of a light source and a lens, more in particular a light bulb and a cylinder lens, which illuminates the blood sample tube 3 and the retroreflecting wall 8 in the shape of a striped light, whereby the axis of the combination preferably forms an angle of for example $\pi/10$ rad relative to the optical axis of the CCD- image pick-up 13/objective 15 combination.

Although the hollow arm 12 is directly mounted on the vertically arranged shaft 11 of the scanning motor 10, as is shown in fig 4, in practice this may be realised differently, as will be discussed hereafter.

A base (not shown) may be provided, on which the DC motor 10 is mounted such that the shaft 11 extends horizontally therein. In the base there is present a worm wheel transmission (not shown) for converting the rotation of the shaft 11 of the DC motor 10 into a horizontal rotation of the hollow arm or the profile 12. A horizontal worm wheel (not shown) of the worm wheel transmission transmits its movement, via a ball bearing (not shown), to the profile 12 located above the base. The DC motor 10 is provided with a reduction gear (not shown) of for example 1 : 10, whilst the worm wheel transmission provides a reduction of for example 1 : 50. As already said, within the profile 12 there are located the objective 15, the CCD-element 13, which may have a length of 1 024 pixels, and that part of the electronics which will be called peripheral electronics. On connecting cable (not shown) is a flat cable which is wound up and unwound, like the spring of a timepiece, in the base with for example 15 turns during rotation, (2 $\pi$rad forwards and backwards). The number of turns, with which the flat cable lies would up in a hollow space of the base prevents the occurrence of wear during rotation. To the outside of the base there are furthermore fixed various connectors (not shown), for the communication with the processor unit 20 in fig 3, whereby the control means 24 only drives the scanning motor 10 via the driving means 26.

On the motor shaft 11 there is mounted an incremental encoder, which is shown in fig 5 but which is not shown in fig 4, which measures the displacement of the motor shaft 11, and therewith the position of the CCD-element 13 during rotation. The incremental encoder has two functions, namely measuring, in combination with the processor unit 20, the speed of the motor shaft 11 in order to make duty cycle controlled driving of the scanning motor 10 possible, and measuring, in combination with the processor unit 20, the angular displacement during rotation.

Preferably a mechanical stop (not shown) is provided, which limits the rotary motion to 2 $\pi$rad. Moreover, for the same purpose a zero position detector (optical detector), (not shown), may be provided at the upper side of the base.

The measurement to determine the blood levels 7, 6 in the blood sample tube 3 is carried out as follows. The blood sample tube 3, illuminated by means of the obliquely placed light source, is displayed on the linear CCD-element 13 having a length of 1 024 pixels by means of the objective 15. The light coming from the light source, illuminating the blood sample tube 3 partly directly and partly via the retroreflecting material 8 present behind the blood sample tube 3, is used to realise a difference in contrast between the blood sample and the hollow space on the one hand and clear plasma and blood sedimentation on the other hand. The analog video signal generated by the CCD-image pick-up 13 is input into the processor unit 20 for further processing. This will be discussed hereafter with reference to fig 5.

When 60 blood sample tubes 3 are used th profile 12 must rotate a step of $\pi/30$ rad for every blood sample tube 3, with a rotation of $2\pi$ rad. The steps of $\pi/30$ rad are derived from the incremental encoder mounted of the shaft 11 of the motor 10, which incremental encoder delivers 2 pulse signals shifted $\pi/2$ rad in phase.

The image projected on the CCD-element 13 is in the shape of a black-to-white transition.

The length of the sedimentation may be defined, simplified as already said before, as the difference which is measured between the starting level of the blood sample in the blood sample tube 3 and the end level reached after exactly one hour.

The steepness of the black-to-white transition will vary, dependent on the nature of the sedimentation. Dependent on the black-to-white transition and the transmission of the light through the sedimentation a rough indication of the kind of sedimentation can be given.

A temperature sensor (not shown) may be provided in the receiving means 1 or measuring drum, which temperature sensor measures the ambient temperature of the blood sample tubes 3. Measuring the temperature is useful because it is to be recommended not to start measuring when the temperature is lower than for example 22 degrees centigrade.

If a sticker with a bar code, or an other identification code carrier, is provided on the blood sample tubes 3 the CCD-element 13 can read the code. Alternatively, a separate bar code sensor (not shown) may be provided, for example next to the keyboard 210 (fig 3), past which bar code sensor the bar code sticker on the blood sample tube 3 needs to be moved. The processor unit 20 (fig 3) provides decoding of the bar code and its input. After such an input of the bar code the display means 280 may state a free position number 2, for example, at which position the blood sample tube 3 is to be placed. It has already been described before what will happen when the blood sample tube 3 is not placed or is placed wrong. In any case, the decoding of the bar code and the so-called administrative input of the blood sample tube 3 into the system takes place entirely automatically.

In fig 5 reference number 13, again, indicates the CCD-sensor, reference number 15 indicates the objective, reference number 3 indicates the blood sample tube, reference number 8 indicates the retroreflecting material, reference number 10 indicates the DC motor and reference number 20 indicates the processor unit.

The incremental encoder is indicated with the reference number 49 in fig 5, the aforementioned peripheral electronics with the reference number 50 and the CCD/motor electronics, which may be mounted on a single printed circuit board (not shown) together with the processor unit 20, are indicated with the reference numbers 51/52. The peripheral electronics 50 comprise line receivers 32, synchronization circuits 33 and line driving means 34 for the analog video signals coming from the CCD-sensor 13. The aforementioned CCD-electronics 51 comprise a timebase 35, which is coupled to the line receivers 32 and analog matching circuits 36, which are coupled to the line driving means 34. Driving and reading of the CCD-element 13 takes place by means of two clock signals, which are generated by the processor unit 20. The two analog output signals from the CCD-element 13 for even and uneven pixels are composed in the analog matching circuits 36. After the analog matching circuits 36 there is connected an amplifier 37 with a variable amplification factor, after which there is connected a filter 38 of 3 dB on the pixel frequency, whose analog video signal is supplied to an A/D converter 39 which takes care of the communication with the processor unit 20 via the look-up table 40.

The aforesaid motor electronics 52 comprise a first interface 41, which couples the incremental encoder 49 to the processor unit 20, and which is furthermore coupled to a second interface 42, which couples the processor unit 20 to the DC motor 10 via an amplifier/driver combination 43.

The operation of the second embodiment is substantially the same as that of the first embodiment.

If a bar code sticker is used and a separate bar code reader is provided, first the bar code is read, after which the display means 280 displays a free position number representing a fixed position 2, at which position the blood sample tube 3 provided with the bar code sticker is to be placed.

If bar code stickers are not provided a first step may be to input both an identification number and a position number into the system by means of the keyboard 210, whereby the display means 280 provides confirmation.

After a blood sample tube 3 has been placed scanning is started by striking the function key F1 of the keyboard 211. The CCD-sensor 13 will be rotated, whereby the blood sample tubes 3 are localized and the starting levels 7 (figs 2 and 4), and possibly the bar code, are read. If no identification number has been input yet the display means 280 will display the position number and an identification number will be requested. Then, after one hour, the erythrocyte sedimentation rate of the blood sample tube 3 can be measured.

## Claims

1. Device for determining the erythrocyte sedimentation rate of blood samples, said device comprising a receiving means for accommodating blood sample tubes at a number of fixed positions therein, a measuring means for detecting blood sample tubes and measuring erythrocyte sedimentation rates, a driving means for driving the measuring means horizontally along the number of fixed positions of the receiving means, and a computer unit which is provided with an input means for giving commands, a time measuring means for providing a position-related control signal for each blood sample tube identified, when a period of time determined in advance has elapsed since the blood sample tube was placed in the receiving means, a control means for driving the driving means, in response to commands from the input means and control signals from the time measuring means, for determining the position of newly placed blood sample tubes in the receiving means and causing measurement of the erythrocyte sedimentation rates, respectively, a processor means for the processing of at least identification and measuring data, and an output means for outputting said data.

2. Device according to claim 1, characterized in that the input means of the computer unit is arranged for inputting a unique identification number for each new blood sample tube which is to be placed or has been placed.

3. Device according to claims 1 or 2, characterized in that the measuring means comprises a CCD-image pick-up.

4. Device according to claim 3, characterized in that new blood sample tubes to be placed are provided with an identification code carrier to be read by the CCD-image pick-up.

5. Device according to claims 1 or 2, characterized in that the measuring means comprises a single optical sensor, said sensor being mounted on a further driving means, coupled to said driving means, for driving the single optical sensor vertically along the blood sample tubes placed in the receiving means.

6. Device according to claim 5, characterized in that the driving means each comprise a stepping motor.

7. Device according to any one of the preceding claims, characterized in that the measuring means measures the erythrocyte sedimentation rate with regard to a certain blood sample tube by determining, when said blood sample tube is being detected, the level of the blood sample present therein and by determining, after the time measuring means has emitted the position related control signal, the transition level in the blood sample between the sediment and the clear plasma.

8. Device according to any one of the preceding claims, characterized in that the number of fixed positions of the receiving means describe a circle.

9. Device according to any one of the preceding claims, characterized in that the output means comprises several display elements, which are arranged in a field and whose number is directly proportional to the number of positions in the receiving means, whereby at least one of the display elements resepctively indicates the status, determined by the computer unit, of the respective position in the receiving means.

10. Device according to claim 9, characterized in that two diodes, each emitting a different colour of light, are provided for each position in the receiving means, whereby the status indication takes place in that the light- emitting diodes light up, do not light up or light up intermittently.

11. Device according to claim 10, characterized in that each pair of diodes, each emitting a different colour of light, is incorporated in a single component.

12. Device according to any one of the preceding claims, characterized in that the input means comprises a numeric keyboard and a function keyboard, and that the output means is provided with a display means for displaying data and commands which have been input, as well as requests to input said data and commands or to manipulate the keyboard otherwise.

13. Device according to any one of the preceding claims, characterized in that it is provided with a parallel and/or serial interface means.

14. Device according to any one of the preceding claims, characterized in that it is provided with an identification code carrier reader which is coupled to the computer unit.

15. Device according to any one of the claims 8 - 14, if (also) dependent on claims 3 or 4, characterized in that the driving means comprises a DC motor, which has a shaft to which a housing for the CCD-image pick-up is coupled such that when the shaft rotates, the housing rotates in a horizontal plane and that furthermore an objective is accomodated, optically in line with the CCD- image pick-up, in the housing, in order to display a respective blood sample tube on the CCD-image pick-up.

16. Device according to claim 15, characterized in that a light source/lens combination is mounted on the housing of the CCD-image pick-up/objective combination, whereby the optical axes of said combinations form a certain angle.

17. Device according to claim 16, characterized in that said angle is in the order of magnitude of $\pi/10$ rad.

18. Device according to any one of the claims 8 - 14, if (also) dependent on claims 3 or 4, or according to any one of the claims 15 -17, characterized in that the inner wall of the receiving means comprises a retroreflecting material.

19. Device according to any one of the claims 15 - 18, characterized in that peripheral electronics coupled to the CCD-image pick-up are accommodated in the housing of the CCD-image pick-up/objective combination.

20. Device according to claim 19, characterized in that the peripheral electronics comprise line receivers, synchronization circuits and line driving means.

21. Device according to claim 20, characterized in that the line receivers are coupled to the computer unit by means of a timebase.

22. Device according to claim 20, characterized in that the line driving means are connected to the computer unit by means of the following cascade circuit: analog matching circuits, an amplifier having a variable amplification factor, a 3 dB-filter on the pixel frequency, an analog-digital converter and a look-up table.

23. Device according to any one of the claims 15 - 22, characterized in that the shaft of the DC motor is coupled to an incremental decoder, which is connected to the computer unit by means of a first interface, which computer unit is in its turn connected to the DC motor by means of a second interface, which receives an input signal from the first interface, and a series circuit of an amplifier and a driving means, such that the DC motor is driven duty cycle controlled, and that the angular displacement of the shaft of the DC motor is measured during rotation.

9

24. Device according to any one of the claims 3, 4, or 7 - 14 if (also) dependent on claims 3 or 4, or according to any one of the claims 15 - 22, characterized in that the CCD- image pick-up is a linear CCD-element with 1 024 pixels.

EP 0 342 730 A2

FIG. 1.

FIG. 2.

FIG. 3

EP 0 342 730 A2

FIG. 4.